# EUROPEAN PATENT APPLICATION

(11) **EP 3 098 035 A1**
(43) Date of publication of application: **30.11.2016**
(21) Application number: 16171361.5
(22) Date of filing: 25.05.2016
(51) Int. Cl.: B25J 15/02, B25J 15/08

(54) **PARALLEL-OPENING GRIPPER**

(30) Priority: 28.05.2015 IT UB20151114
(71) Applicant: Camozzi S.p.A. Societa' Unipersonale, 25122 Brescia (IT)
(72) Inventor: CAMOZZI, Marco, 25122 BRESCIA (IT); CHIARINI, Pierluigi, 25122 BRESCIA (IT); BOTTARELLI, Fabio, 25122 BRESCIA (IT)
(74) Representative: Chimini, Francesco

(57) **Abstract**

A parallel-opening gripper (1), pneumatic or electric, comprises a clamp body (2), a pair of jaws (22,24), a main piston (10) rigidly connected to a first (22) of said jaws (22,24), and an oscillating rod (30) arranged between the jaws (22,24), pivoted to the clamp body (2) and having opposite ends hinged to the respective jaw (22,24), so as to determine the reciprocal separation or approach of the jaws (22,24) according to the translation of the main piston (10).

## Description

This invention relates to a gripper for gripping and handling workpieces, and in particular a parallel-opening gripper, pneumatically or electrically actuated.

As is known, grippers are customarily used in complex systems, such as robots, manipulators, assembly machines and the like, for gripping workpieces and/or their handling.

Many embodiments of grippers are known.

For example, there is known the embodiment described in document US 7,635,154, wherein the gripper includes a clamp body wherein is housed a main piston alternately translatable, rigidly connected to one of the two jaws, and a transmission lever, having an intermediate portion of increased section. In this embodiment, the lever is hinged to the clamp body and engaged at one end with the other jaw and, at the other end, with the piston.

However, grippers of this type have some drawbacks; for example, they are somewhat difficult to assemble, due for example to the difficulty of engaging the lever with the piston and hinging it to the clamp body.

The purpose of this invention is to realise a parallel-opening gripper that overcomes the drawbacks mentioned.

This purpose is achieved by a gripper according to claim 1. The dependent claims describe embodiment variants.

The characteristics and advantages of the gripper according to this invention will be apparent from the following description, given by way of non-limiting example, in accordance with the accompanying figures, in which:
- Figure 1a is a partially sectional view of a gripper, according to an embodiment of this invention (electric actuation), in an open configuration;
- Figure 1b shows the gripper of Figure 1a, in a closed configuration;
- Figures 2a and 2b illustrate a movement mechanism of the gripper of Figure 1a, in an open configuration;
- Figures 3a and 3b illustrate the movement mechanism of the gripper of Figure 1b, in a closed configuration;
- Figure 4a is a partially sectional view of a gripper, according to a further embodiment of this invention (pneumatic actuation), in an open configuration;
- Figure 4b shows the gripper of Figure 4a, in a closed configuration;
- Figures 5a and 5b illustrate a movement mechanism of the gripper of Figure 4a, in an open configuration;
- Figures 6a and 6b illustrate the movement mechanism of the gripper of Figure 4b, in a closed configuration;
- Figures 7a, 7b and 7c show views of a still further embodiment.

With reference to the accompanying figures, 1 globally indicates a gripper for gripper and handling workpieces.

The gripper 1 comprises a clamp body 2, for example made in a single piece of metallic material, for example, steel.

Internally, the clamp body presents a first compartment that forms a piston seat 4, having prevalent extension along a piston axis X, a second compartment that forms a jaw seat 6, having extension along an opening axis Y, typically parallel to the piston axis X and spaced from it, and open towards the outside through a front opening 7, and a passage 8 that connects the piston seat 4 with the jaw seat 6 and, typically extending along a passage axis Z orthogonal to the piston axis X and the opening axis Y.

The gripper 1 further comprises a main piston 10, housed in the piston seat 4, movable in translation along said piston axis X, with reciprocating motion.

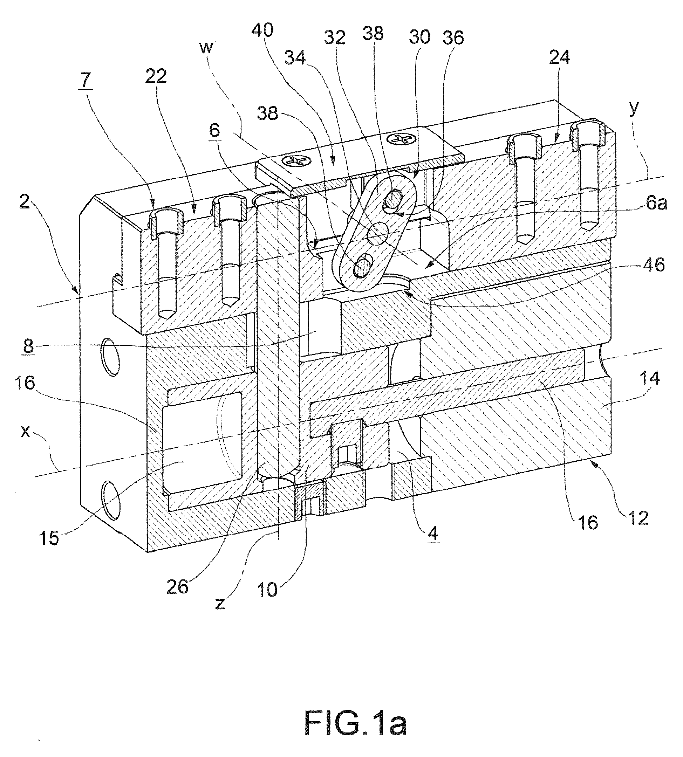

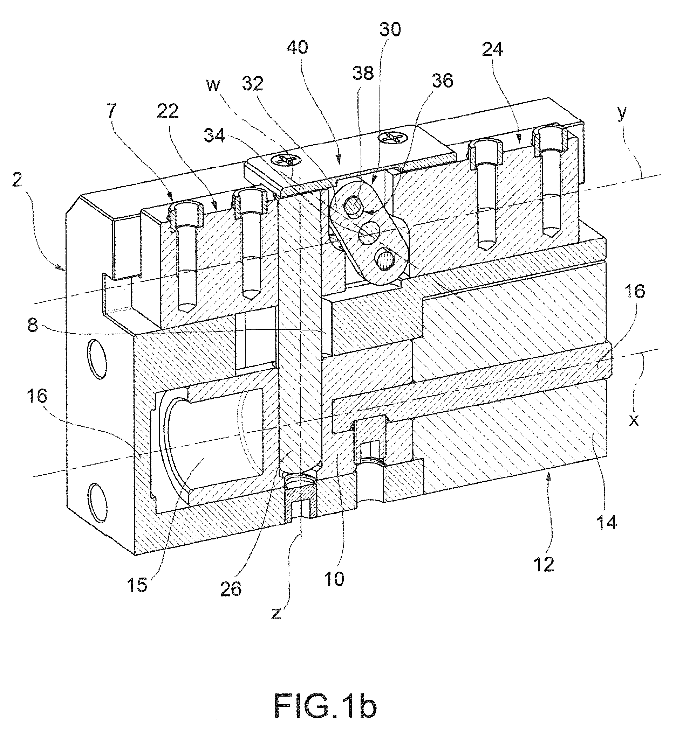

For example, according to an embodiment, the gripper 1 includes an electrical movement of the main piston (Figures 1a to 3b).

For this purpose, according to this embodiment, the gripper 1 includes on board an electric actuator 12, for example of the linear type, operatively connected to the main piston 10.

The actuator 12 typically comprises a stator 14, applied to the clamp body 2, and a translatable stem 16, slidably engaged with the stator 14 and connected integrally with the main piston 10.

For example, the actuator 12 is arranged beside the piston seat 4, along the piston axis X, laterally closing this, so that the stem 16 extends into the piston seat 4, for example so as to be coaxial to the piston axis X, connecting integrally to the main piston 10.

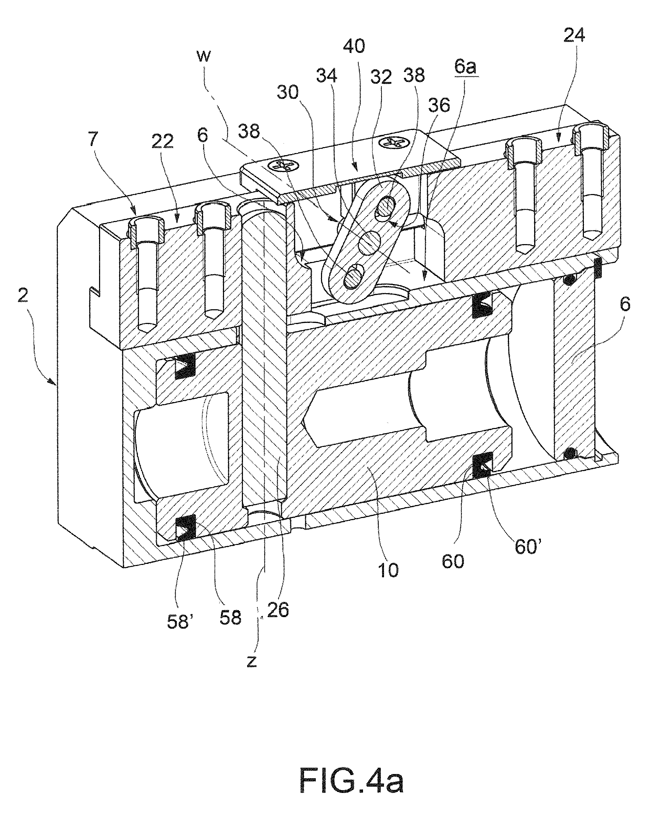

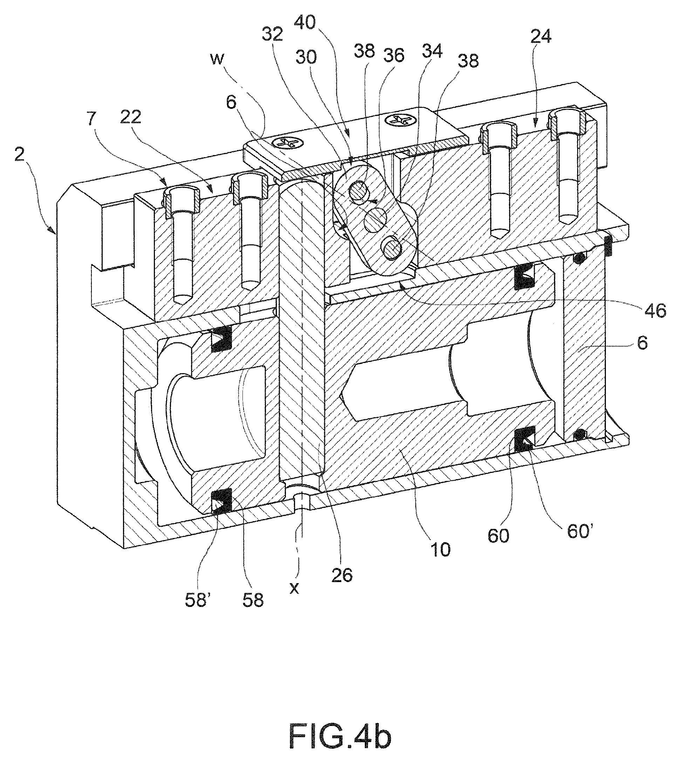

According to a further embodiment, the gripper 1 includes a pneumatic movement of the main piston (Figures 4a to 6b).

For this purpose, according to this embodiment, the main piston 10 is provided with sealing seats 58,60 in which are housed respective seals 58',60', while the clamp body 2 is provided with connections for the supply and discharge of pressurised air, so as to move the main piston 10 in translation, for example, with reciprocating motion.

In addition, according to this embodiment the piston seat 4 is closed, at one end, by a cover 62, which is also sealingly applied.

According to further embodiments, the gripper 1 comprises return means suitable to permanently push the main piston towards the position assumed in an open configuration or alternatively in a closed configuration (as shown in Figure 1a).

For example, said return means comprise a spring 15, compressible between a head of the main piston 10, for example on the side opposite to that engaged with the stem 16 or provided with the cover 62, and a fixed abutment, for example constituted by an abutment wall 16 of the clamp body 2.

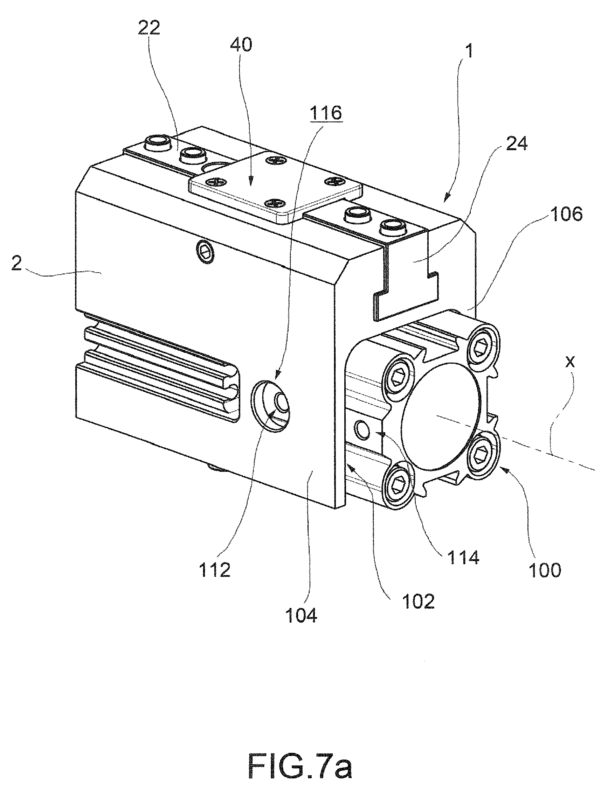

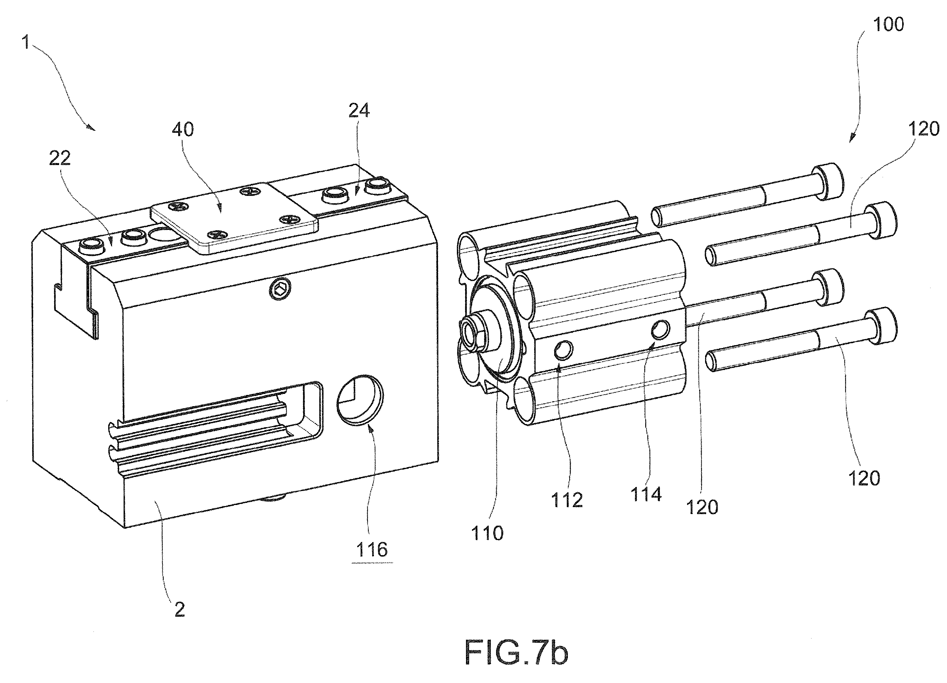

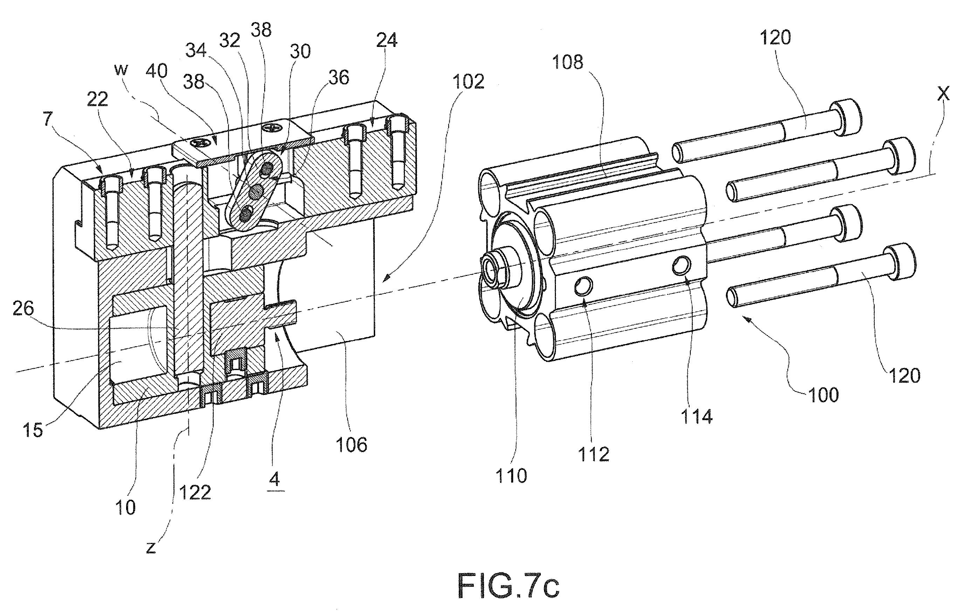

According to a still further embodiment (Figures 7a, 7b and 7c), the gripper 1 includes a pneumatic type actuation, and is provided with a cartridge piston group 100 insertable in the clamp body 2, provided for the purpose with a specific piston group seat 102.

According to this embodiment, the clamp body 2 comprises seat walls 104,106, parallel to the piston axis X and spaced transversely, so as to delimit the piston group seat 102, adjacent to the piston seat 4.

The piston assembly 100 comprises a cylinder 108 and a movement piston 110 pneumatically movable in the cylinder 108, single-acting or double-acting. For the connection to the pressurised air supply device, the cylinder 108 is provided with fittings 112,114.

For example, at least one of said fittings 112 is accessible from the outside, when the piston group 100 is coupled in position with the clamp body 2, by means of an auxiliary opening 116 formed through one of said side walls 104,106.

Preferably, also, according to this embodiment, the gripper 1 comprises attachment means 118 suitable to mechanically connect, in a releasable manner, the piston group 100 to the clamp body 2. For example, said attachment means comprise a plurality of screws 120.

According to this embodiment, the gripper 1 further comprises an attachment shank 122, integral with the main piston 10 and suitable to be rigidly connected with the movement piston 110 of the piston group 100.

In other words, the cartridge piston group is removable from the piston group seat as a unitary group in its own right and replaceable with a possible new piston group.

Generally, the gripper 1 further comprises a pair of jaws 22,24, housed in the jaw seat 6 in a translatable manner along the opening axis Y.

Preferably, the jaw seat 6 has an inverted T section, and the jaws are shaped so as to have a corresponding complementary section, emerging outside through the front opening 7, so as to allow the application of jaws or further gripping devices (not shown).

The first jaw 22 is rigidly connected with the main piston 10, so as to follow it in translation.

For example, the gripper 1 comprises a connecting element 26, for example in the form of a pin, connected on one side, to the main piston 10, projecting radially from this, and, on the other side, to the first jaw 22, after passing through the passage 8.

The second jaw 24 is instead movable through connection with the first jaw 22, by means of an oscillating rod 30 disposed between the two jaws 22,24.

The oscillating rod 30 comprises a rod body 32, engaged with the jaws 22,24, and a fulcrum pin 34, projecting from the rod body 32 and pivoted to the clamp body 2 along a fixed oscillation axis W.

The oscillation axis is typically orthogonal to the opening axis Y and the passage axis Z; the rod body 32 is oscillating in an imaginary plane perpendicular to the oscillation axis W.

The rod body 32 has at least a pair of slots 36, passing through the thickness (i.e., having extension along the oscillation axis W), arranged at opposite ends of the rod body 32 with respect to the oscillation axis W, each engaged with a respective pin 38 provided on the jaws 22,24.

Advantageously, the slots 36 allow an arrangement of the pins 38 during the reciprocal separation and approach.

Preferably, also, each jaw 22,24 comprises, in correspondence of the facing faces, a respective pair of prongs 42,44, between which is contained the oscillating rod, arranged asymmetrically, for example inferiorly on the first jaw 22 and superiorly on the second jaw 24.

Advantageously, this arrangement allows an interpenetration of the jaws in the closed configuration.

Preferably, moreover, the jaw seat 6, in correspondence of a bottom surface 6a on which slide the jaws 22,24, has a recess 46 to accommodate the possibly projecting end of the rod 30, for example, in the closed configuration, from the jaw 22, thus avoiding structural interference with the clamp body 2.

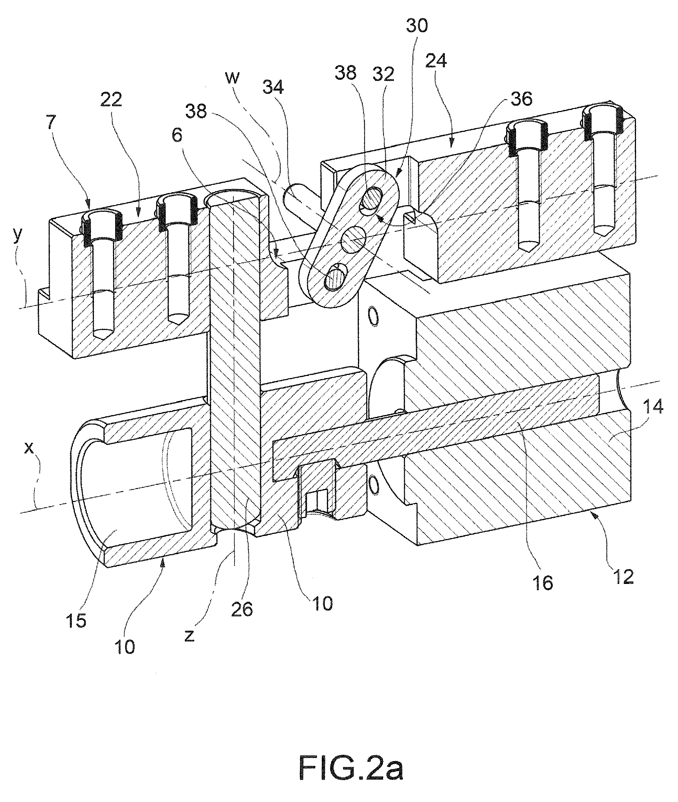

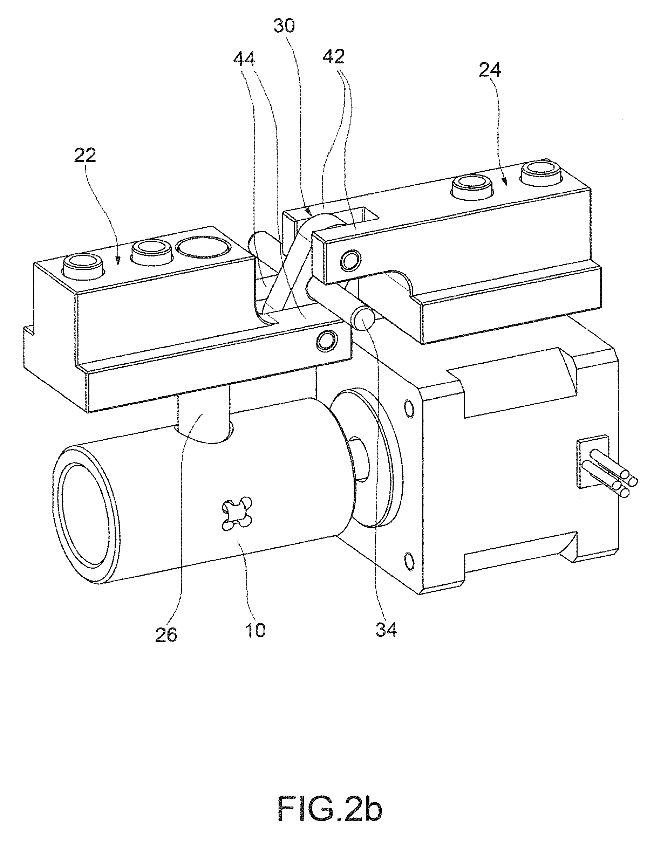

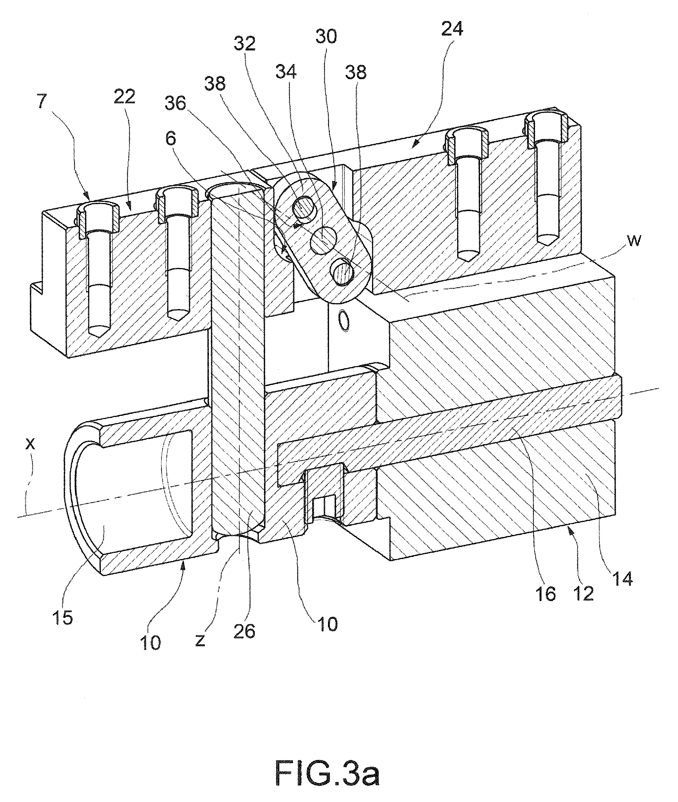

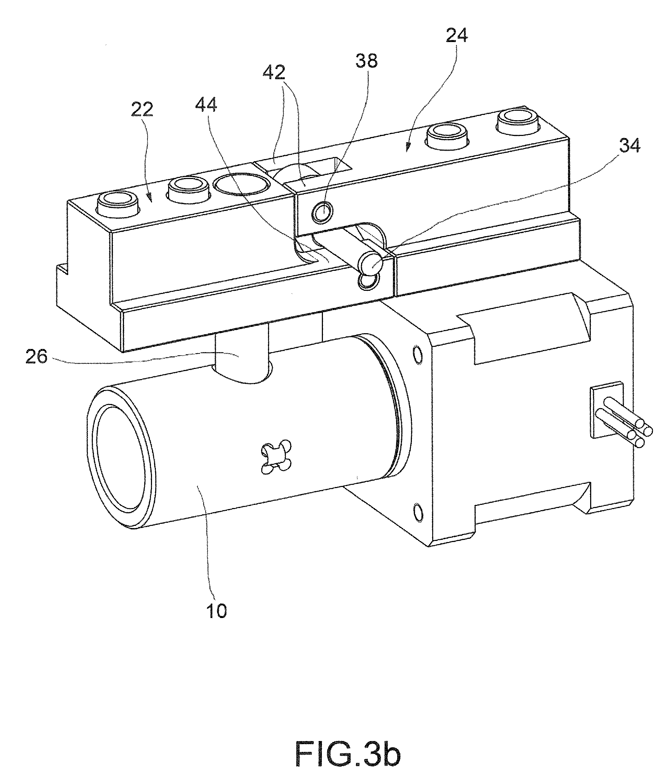

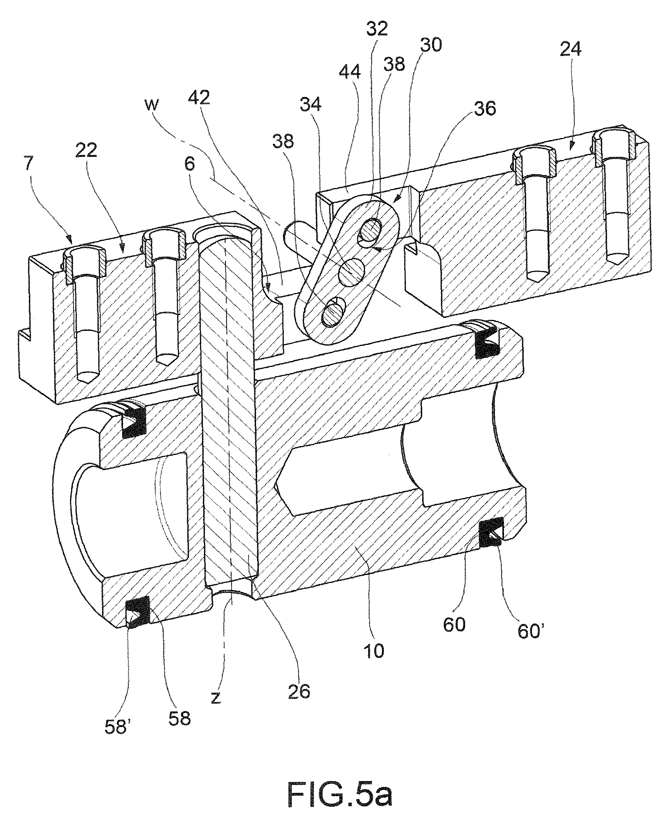

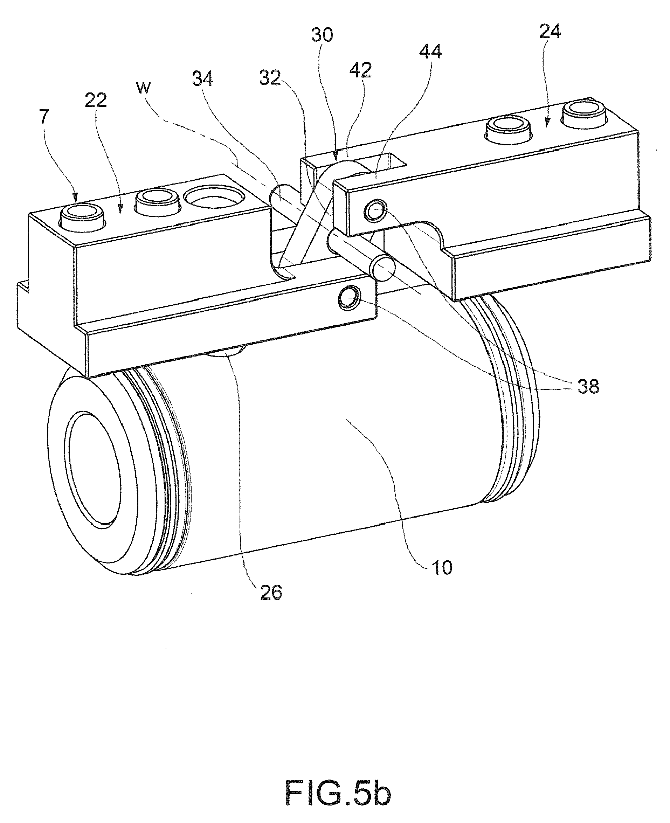

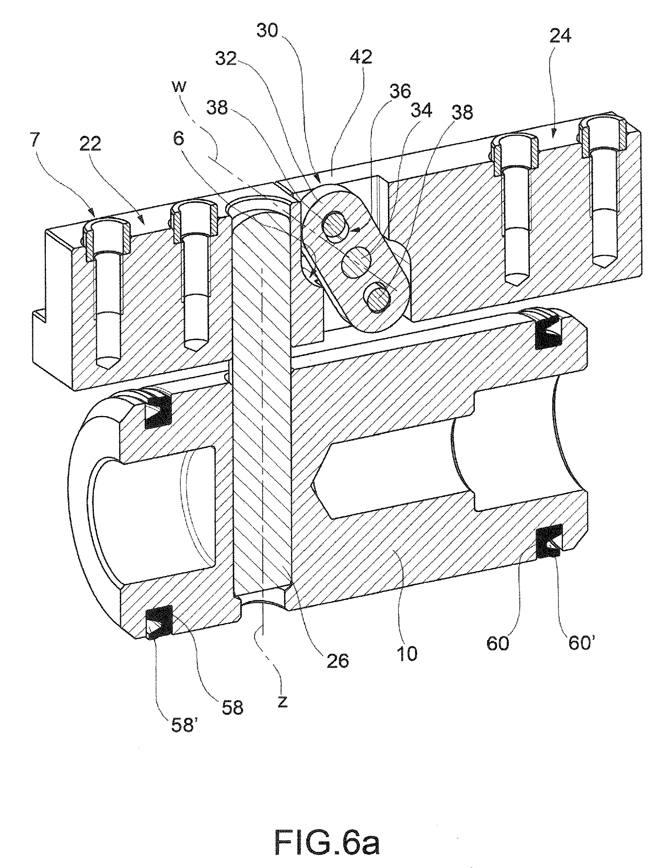

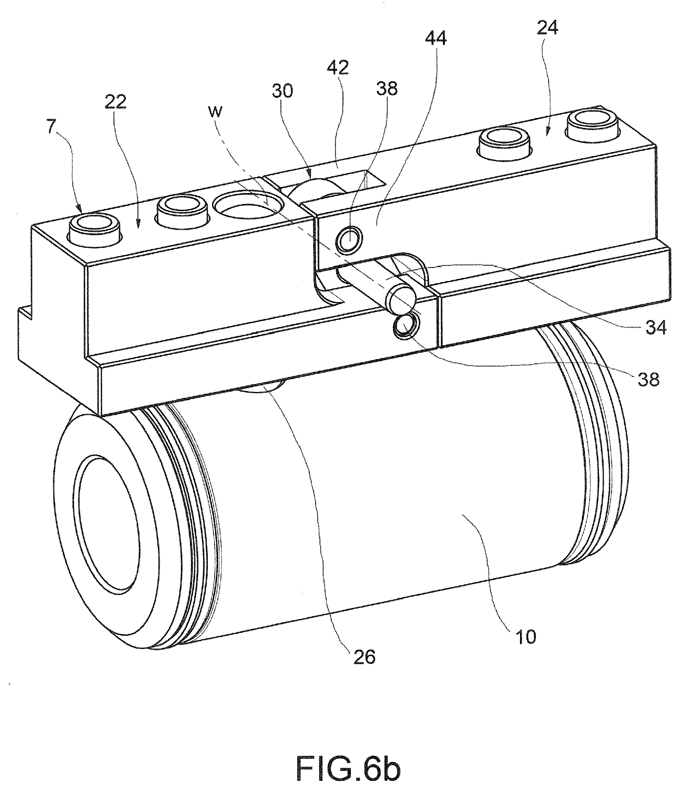

The gripper is structured to assume a configuration of maximum opening, in which the jaws are arranged at the maximum mutual distance along the opening axis Y and the main piston is disposed in a position of maximum opening (Figures 2a, 2b and Figures 5a, 5b), a closed configuration, in which the jaws are arranged along the opening axis Y and the main piston is disposed in a closed position (Figures 3a, 3b and Figures 6a, 6b).

According to an embodiment, the gripper is structured to also assume infinite intermediate opening configurations, depending on the position assumed by the main piston in the piston seat 4 between the position of maximum opening and the closed position.

For example, the gripper 1 is normally closed and, starting from the closed configuration (Figures 3a, 3b and 6a, 6b), due to movement of the main piston 10 towards the maximum opening position, electrically or pneumatically, reaches the maximum opening configuration.

The translation of the main piston 10 leads to the corresponding translation of the first jaw 22, rigidly connected to said main piston 10 and, at the same time, to a rotation of the oscillating rod 30, which pushes the second jaw 24, to which it is hinged, away from the first jaw 22.

Starting from the maximum opening configuration, the translation of the main piston 10 towards the closed position (Figures 2a, 2b and Figures 5a, 5b), set electrically, pneumatically or by the action of the return means, leads to the corresponding translation of the first jaw 22 and to the simultaneous counter-rotation of the oscillating rod 30, which pulls the second jaw 24 in approach to the first jaw 22.

The mechanism, provided with the oscillating rod 30, also allows the self-centring of the grip.

According to a further embodiment, the gripper further comprises a protection wall 40, removably applied to the clamp body, arranged in correspondence of an intermediate region between the jaws 22,24, for covering a region of space of the jaw seat 6 that is created between said jaws in the open configuration.

Preferably, the protection wall 40 is removable for access to said region of space between the jaws 22,24 in the open configuration, the oscillating rod 24 being housed in said region of space.

Innovatively, the parallel-opening gripper according to this invention overcomes the drawbacks mentioned above with reference to the known art, since its assembly is particularly easy.

In fact, the oscillating rod, according to the invention, is engaged with the two jaws and is not therefore necessary to reach the underlying main piston for engagement with this.

Moreover, advantageously, the gripper according to the invention has low production costs, since the assembly is simplified and it is not necessary to perform specific machining operations on the main piston, and the oscillating rod and the jaws are easy to make.

Advantageously, moreover, the embodiment with cartridge piston group allows significantly facilitates maintenance of the gripper, since a worn or broken piston group can be removed from the piston group seat as a unitary group in its own right and replaced with a new one.

Advantageously, moreover, such an embodiment requires low production costs, since it allows the gripper to exploit the sensor seats provided on the piston group.

According to a further advantageous aspect, this embodiment is even more economical, since no special machining work is necessary in the clamp body to create a sealed chamber for the pneumatic actuation of the movement piston.

According to a still further advantageous aspect, this embodiment is particularly compact and of limited overall dimensions.

It is clear that one skilled in the art, in order to meet contingent needs, may make changes to the gripper described above, all contained within the scope of protection defined by the following claims.

## Claims

1. Parallel-opening gripper (1) comprising:
- a clamp body (2) having a piston seat (4) that extends along a piston axis (X), a jaw seat (6) that extends along an opening axis (Y), said axes being spaced apart and parallel, and a passage (8) that connects the piston seat (4) with the jaw seat (6) and extends along a passage axis (Z) perpendicular to the piston (X) and the opening axis (Y);
- a pair of jaws (22, 24), housed in the jaw seat (6), side by side along the opening axis (Y) and sliding along said opening axis (Y);
- a main piston (10) slidably housed in the piston seat (4), rigidly connected to a first (22) of said jaws (22,24) via a connecting element (26) that passes through said passage (8);
- an oscillating rod (30) arranged in the jaw seat (6) between the jaws (22, 24), pivoting via a fulcrum pin (38) on the clamp body (2) and having opposite ends hinged to the respective jaw (22, 24), so as to determine the reciprocal separation or approach of the jaws (22,24) according to the translation of the main piston (10).

2. Gripper according to claim 1, wherein the fulcrum pin (38) determines an oscillation axis (W) having a fixed position with respect to the clamp body (2) during the passage from the open configuration to the closed configuration and vice versa.

3. Gripper according to claim 2, wherein the oscillation axis (W) is orthogonal to the opening axis and the passage axis (Z).

4. Gripper according to any of the preceding claims, wherein said oscillating rod (30) has at least one pair of slots (36), each arranged at one end of the rod, for engagement with the respective jaw (22, 24).

5. Gripper according to any of the preceding claims, wherein the jaw seat (6), in correspondence to a bottom surface (6a) on which are sliding the jaws (22, 24), has a recess (46) for receiving an end of the rod (30) possibly protruding from one of said jaws (22, 24).

6. Gripper according to any of the preceding claims, wherein each jaw (22, 24) comprises, in correspondence to facing faces, a respective pair of prongs (42, 44), to which are respectively hinged the ends of the oscillating rod (30).

7. Gripper according to claim 6, wherein the pairs of prongs (42, 44) are arranged asymmetrically to each other, so that the jaws interpenetrate each other in a closed configuration.

8. Gripper according to claim 6 or 7, wherein the first pair of prongs (42) is arranged below on the first jaw (22) and the second pair of prongs (44) is arranged above on the second jaw (24), or vice versa.

9. Gripper according to any of the preceding claims, in which the movement of the main piston can be actuated pneumatically.

10. Gripper according to claim 9, wherein the clamp body (2) is provided with fittings for the connection of the gripper to a device for supplying air under pressure.

11. 6. Gripper according to claim 9, comprising a cartridge piston group (100) applicable to the clamp body (2) and rigidly engageable with the main piston (4).

12. Gripper according to claim 11, wherein the clamp body (2) has a piston group seat (102) for housing, at least partially, the piston group (100), said piston group seat (102) being contiguous to the piston chamber (4).

13. Gripper according to claim 11 or 12, wherein the piston group (100) comprises fittings (112,114) for connection to a device for supplying air under pressure.

14. Gripper according to any of claims 1 to 8, wherein the movement of the main piston is electrically controllable.

15. Gripper according to claim 14, comprising a linear electric actuator (12) for the electrical control of the translation of the main piston, said actuator being applied to the clamp body (2) and having a translatable stem (16) rigidly connected to the main piston (10).

16. Gripper according to any one of the preceding claims, comprising a protection wall (40), removably applied to the clamp body, arranged in correspondence to an intermediate region between the jaws (22, 24), for covering a region of space of the jaw seat (6) that is created between said jaws in the open configuration.

17. Gripper according to claim 16, wherein the protection wall (40) is removable for access to said region of space between the jaws (22, 24) in the open configuration, the oscillating rod (30) being housed in said region of space.

18. Gripper according to any of the preceding claims, wherein said gripper is self-centring.
